# FASCICULE DE BREVET EUROPEEN

(11) **EP 0 645 240 B1**
(45) Date de publication et mention de la délivrance du brevet: **01.07.1998**
(21) Numéro de dépôt: 94402094.0
(22) Date de dépôt: 21.09.1994
(51) Int. Cl.: B32B 17/10, B32B 31/00, B29C 63/00, H01Q 1/12, B29C 70/00

(54) **Procédé de fabrication d'un vitrage feuilleté comportant des fils métalliques incorporés**
Verfahren zur Herstellung einer Verbundglasscheibe mit eingelegten Metalldrähten
Process for making a laminated glass containing inserted metal wires

(30) Priorité: 23.09.1993 DE 4332320
(43) Date de publication de la demande: 29.03.1995
(73) Titulaire: SAINT-GOBAIN VITRAGE, 92400 Courbevoie (FR)
(72) Inventeur: Sauer, Gerd M., 52224 Stolberg (DE); Reul, Bernhard M., 52062 Aachen (DE)
(74) Mandataire: Muller, René

(56) Documents cités:
- FR-A- 958 703
- US-A- 2 539 690

## Description

La présente invention concerne un procédé de fabrication d'un vitrage en verre feuilleté comportant des fils métalliques, en particulier des fils d'antenne, disposés dans la couche thermoplastique intermédiaire.

Dans les procédés connus pour la fabrication d'un vitrage en verre feuilleté comportant un fil d'antenne disposé dans la couche intermédiaire thermoplastique, le fil d'antenne est déposé dans la disposition géométrique souhaitée sur la pellicule thermoplastique formant ultérieurement la couche intermédiaire, sachant que la pellicule est ramollie par chauffage et que le fil d'antenne est pressé dans la pellicule ramollie. Un tel procédé est décrit par exemple dans le document DE-2 043 706 C3.

Les pellicules thermoplastiques qui trouvent leur application comme couche adhésive pour des vitrages en verre feuilleté et qui sont généralement constituées de polyvinylbutyral sont très souples et flexibles et sont difficiles à manipuler en raison de leur médiocre stabilité de forme. Lors de la manipulation des pellicules en vue de la fabrication des vitrages en verre feuilleté le fil déposé sur la pellicule peut facilement se détacher de celle-ci, de sorte que le fil d'antenne est par endroit écarté de la disposition géométrique souhaitée et, dans des cas extrêmes, se rompt. Ces difficultés sont d'autant plus gênantes que les fils utilisés sont plus fins.

Pour la fabrication de vitrages chauffants électriques en verre feuilleté comportant des fils de chauffage disposés dans la couche intermédiaire thermoplastique on connaît d'après le document DE-1 496 040 un procédé suivant lequel les fils de chauffage sont fixés dans une disposition parallèle sur un cadre, sont déposés avec ce cadre directement sur l'une des deux feuilles de verre destinées au vitrage feuilleté et sont immobilisés dans leur position sur la feuille de verre par le fait qu'elles sont aspergées d'une solution de la même matière que celle qui constitue la couche intermédiaire et qui, après évaporation du solvant, forme une peau mince par dessus le verre et les fils. Ce procédé ne convient pas à la fabrication de vitrages en verre feuilleté comportant un fil d'antenne incorporé.

D'après le document DE-30 01 554 on connaît un procédé pour déposer des fils fins dans la pellicule intermédiaire du verre feuilleté suivant lequel on enroule le fil en hélice autour d'un filament en matière synthétique constitué de la même matière de base que la pellicule intermédiaire et on enfonce le filament ainsi enveloppé par le fil dans la pellicule intermédiaire. Lorsque plusieurs fils doivent être ainsi disposés parallèlement les uns aux autres, des filaments en matière synthétique enveloppés de fils doivent être tendus, en nombre correspondant, au-dessus de la pellicule thermoplastique intermédiaire. Il est alors d'une part difficile de garantir une disposition géométrique stable des fils. D'autre part le risque existe que lors de la manipulation ultérieurement nécessaire de la pellicule intermédiaire souple ainsi que lors des phénomènes de retrait de la pellicule intermédiaire qui sont souvent observés, cette pellicule se déforme, de sorte que la disposition du ou des fils peut dévier de celle qui est souhaitée. Enfin, ce procédé ne permet pas de disposer les fils de façon exactement linéaire, parce qu'ils se présentent toujours sous une forme hélicoïdale tridimensionelle.

L'invention a pour but de procurer un procédé pour la fabrication d'un vitrage en verre feuilleté comportant un ou plusieurs fils métalliques, en particulier des fils d'antenne, très fins disposés dans la couche intermédiaire qui supprime au maximum le risque d'une déformation ou d'une destruction des fils d'antenne au cours du traitement ultérieur pour former le vitrage en verre feuilleté, qui puisse être intégré sans difficulté dans le procédé de fabrication habituel de vitrages en verre feuilleté et qui se prête, en particulier, à la fabrication de vitrages en verre feuilleté comportant des fils d'antenne extrêmement fins et, par conséquent, largement invisibles. Dans l'exposé ci-après, on se réfère plus particulièrement à des "fils d'antenne".

Suivant l'invention, ce but est atteint par le fait que le ou les fils d'antenne sont déposés dans la disposition géométrique souhaitée sur une pellicule de support intermédiaire pourvue d'une couche d'adhésif faite du même polymère thermoplastique que la couche intermédiaire du vitrage en verre feuilleté, sont fixés à/dans cette couche d'adhésif sous l'effet de chaleur et de pression, sont transférés à l'aide de la pellicule de support intermédiaire sur l'une des feuilles de verre formant le vitrage en verre feuilleté, puis après enlèvement de la pellicule de support intermédiaire, les feuilles de verre et la couche intermédiaire sont transformées de la manière habituelle par un traitement ultérieur en un vitrage en verre feuilleté.

Les mesures conformes à l'invention permettent de séparer totalement l'étape du procédé au cours de laquelle les fils fins doivent être traités en tant que tels et déposés dans la disposition géométrique souhaitée des étapes du procédé qui sont nécessaires pour la fabrication du vitrage en verre feuilleté. Cette étape pourrait, par exemple, être réalisée dans un environnement particulièrement approprié à cet effet au moyen de dispositifs spéciaux qui ne conviennent pas pour une application dans une installation de fabrication de vitrages en verre feuilleté. Ceci permet d'une part d'atteindre une précision élevée pour la disposition géométrique des fils sur la pellicule de support intermédiaire, précision qui reste conservée même après le transfert sur la feuille de verre, puisque les fils sont transférés avec la couche d'adhésif sur la feuille de verre rigide et sont fixés sur celle-ci en même temps que la couche d'adhésif thermoplastique, de sorte que toute déformation ultérieure est exclue. D'autre part, la manipulation de la pellicule de support intermédiaire dans l'installation de fabrication des vitrages en verre feuilleté est nettement plus simple que la manipulation des fils eux-mêmes, de sorte que le procédé dans son ensemble donne de meilleurs résultats et s'insère mieux dans le procédé de fabrication de vitrages en verre feuilleté.

Le procédé conforme à l'invention est particulièrement adéquat lorsque plusieurs fils extrêmement fins présentant des diamètres n'atteignant que 15 à 50 µm doivent être noyés dans une disposition mutuellement parallèle et avec une orientation rectiligne dans le vitrage en verre feuilleté. Alors que dans les procédés classiques, il est difficile de connecter des fils aussi fins, à l'intérieur du vitrage en verre feuilleté, à une bande de clinquant qui, telle quelle, va du vitrage en verre feuilleté à un élément de connexion, dans le procédé conforme à l'invention, une telle bande de clinquant peut être connectée d'une manière nettement plus simple aux fils déjà avant le dépôt de ceux-ci sur la feuille de verre. Le déplacement de cette étape du procédé lors de la fabrication du verre feuilleté proprement dite vers l'étape de la préfabrication du composant d'antenne contribue aussi notablement à faciliter le procédé de fabrication du vitrage en verre feuilleté proprement dit.

Le procédé conforme à l'invention peut, par exemple, être réalisé de manière telle que les fils d'antenne déposés sur la pellicule de support intermédiaire pourvue de la couche d'adhésif thermoplastique soient enfoncés dans celle-ci et fixés à l'aide d'un rouleau de pression chauffé.

Suivant une autre forme de réalisation du procédé conforme à l'invention, le dépôt et la fixation des fils d'antenne sur la pellicule de support intermédiaire revêtue de l'adhésif thermoplastique sont réalisés de la manière suivante : les fils sont tendus au-dessus de la pellicule de support intermédiaire et sont chauffés par application d'une tension électrique avant d'être enfoncés dans la couche d'adhésif thermoplastique. Le procédé peut alors être conduit de façon telle qu'avant l'application des fils sur la pellicule de support intermédiaire, ces fils tendus reçoivent, à des distances prédéterminées, des bandes de clinquant qui y sont connectées, d'une manière durable et conductrice de l'électricité par soudure par friction et que ces bandes de clinquant qui servent de languettes de connexion d'antenne dans le vitrage en verre feuilleté sont utilisées pour la mise en contact des fils en vue de l'application de la tension électrique destinée au chauffage des fils lors de leur incorporation dans la couche d'adhésif thermoplastique de la pellicule de support intermédiaire.

D'autres particularités et avantages de l'invention ressortiront des revendications et de la description d'une forme de réalisation préférée de l'invention donnée ci-après avec référence aux dessins annexés, dans lesquels :
la Fig. 1 est une vue partielle d'un pare-brise comportant une antenne en fils fins conforme à l'invention;
la Fig. 2 illustre un dispositif pour la production de configurations d'antennes préfabriquées sur une pellicule de support intermédiaire;
la Fig. 3 montre des conducteurs d'antenne préfabriqués avec la pellicule de support intermédiaire après la séparation de la bande de support intermédiaire fabriquée en continu, et
la Fig. 4 est une vue partielle à plus grande échelle d'un pare-brise dans la zone de la connexion d'antenne.

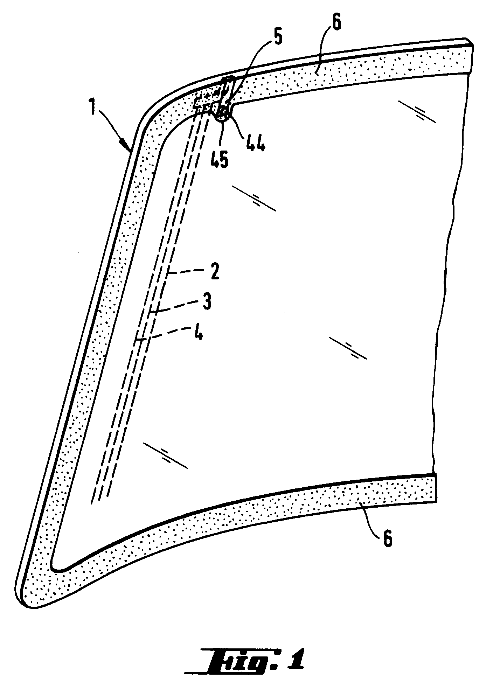

La Fig. 1 montre une partie latérale d'un pare-brise 1 en verre feuilleté, vu depuis le côté orienté vers l'habitacle passager, qui est pourvu de trois conducteurs d'antenne rectilignes et mutuellement parallèles 2, 3 et 4. Ces conducteurs d'antenne 2, 3 et 4 sont situés entre les deux feuilles de verre individuelles formant le vitrage en verre feuilleté, c'est-à-dire à l'intérieur de la couche intermédiaire thermoplastique unissant ces deux feuilles de verre individuelles. Les trois conducteurs d'antenne 2, 3 et 4 sont constitués de fils de tungstène très fins d'un diamètre d'environ 20 µm et sont espacés d'environ 2 à 5 mm. Etant donné que les fils d'antenne sont extrêmement fins et sont, en outre, noircis superficiellement, ils sont pratiquement invisibles à l'oeil nu sans que cela nuise sensiblement à la puissance de l'antenne.

Les fils d'antenne 2, 3 et 4 sont reliés de manière conductrice de l'électricité par une bande de clinquant 5 à une de leurs extrémités. La bande de clinquant 5 est pliée à 45° et sort de la périphérie du vitrage en verre feuilleté. Le long du bord, le pare-brise 1 est, par exemple, pourvu, du côté orienté vers l'habitacle des passagers, d'un cadre décoratif 6 en une peinture émail à cuivre qui, lorsque le pare-brise est monté, empêche la vue de l'adhésif de montage et en même temps protège l'adhésif de montage à l'égard des rayons ultraviolets. Les fils d'antenne 2, 3 et 4 sont en substance parallèles aux bords latéraux du pare-brise.

Les trois fils d'antenne 2, 3 et 4 et la bande de clinquant 5 qui y est reliée sont appliqués sous la forme d'un composant préfabriqué, avant la fabrication du vitrage en verre feuilleté, sur une surface prévue pour l'application sur la couche intermédiaire thermoplastique de l'une des deux feuilles de verre individuelles à l'aide d'une pellicule de support intermédiaire.

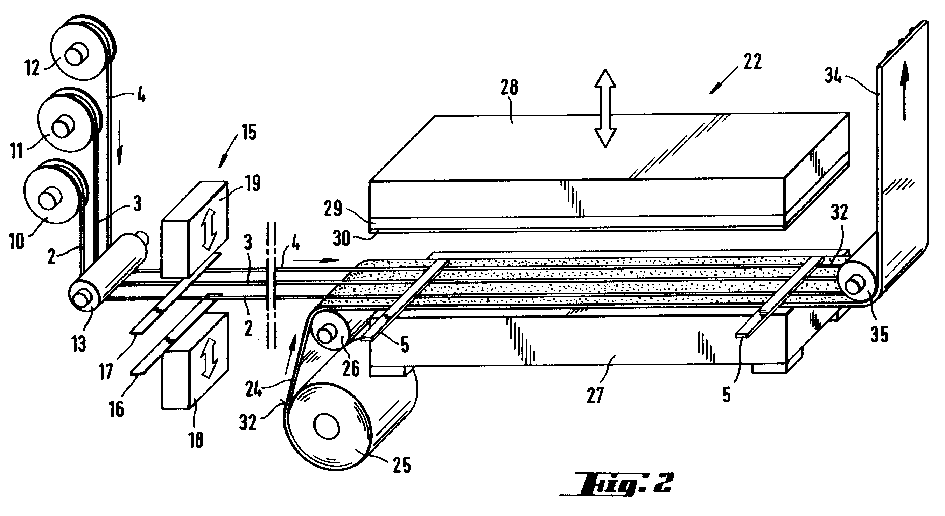

La production des composants d'antenne préfabriqués est réalisée à l'aide d'un dispositif tel qu'illustré sur la Fig. 2. Ce dispositif comprend un dispositif d'alimentation approprié pour trois bobines de fil 10, 11 et 12 dont sont dévidés les fils 2, 3 et 4, qui sont déviés dans le sens horizontal par un rouleau de guidage 13. Les fils horizontaux tendus traversent d'abord un poste de soudure par friction 15 dans lequel ils sont chaque fois, à des distances prédéterminées, enfoncés entre deux bandes de clinquant 16, 17 orientées perpendiculairement au sens des fils et sont soudés à celles-ci. A cette fin, les bandes de clinquant 16, 17 sont comprimées avec les fils 2, 3 et 4 situés entre elles par deux mâchoires métalliques 18, 19 dont l'une est animée de vibrations ultrasoniques par connexion à un générateur d'ultrasons approprié. Grâce à ce processus de soudage par friction, les fils de tungstène sont noyés dans du cuivre, ce qui conduit à un contact électrique de très bonne qualité.

Au lieu de deux bandes de clinquant 16, 17, on peut aussi utiliser avec un avantage particulier des bandes conductrices préparées qui sont déjà pourvues d'un revêtement en une matière synthétique résistant à la déchirure et dont seule la languette métallique qui doit être soudée aux fils, est libre. La languette est alors avantageusement repliée sur elle-même, de sorte que la section repliée de la bande conductrice enferme les fils avant l'exécution de l'opération de soudage par friction.

Les fils ainsi pourvus de languettes de connexion 5 à des distances prédéterminées sont alors fixés sur une pellicule de support intermédiaire 24 dans un poste de pressage 22. La pellicule de support intermédiaire 24 est dévidée sous forme d'une bande sans fin d'une bobine d'alimentation 25 montée à rotation en dessous du plan de transport des fils et est amenée par l'intermédiaire d'un rouleau de guidage 26 au poste de pressage proprement dit 22 qui comporte une table 27 et un plateau de pression supérieur 28. Le plateau de pression 28 est pourvu à sa face inférieure d'une couche tampon élastique 29 qui, pour sa part, est pourvue à sa surface inférieure d'une pellicule de séparation 30 qui empêche le plateau de pression d'adhérer à la surface de la bande de support 24.

La pellicule de support intermédiaire 24 est pourvue, sur sa surface supérieure, d'une couche mince 32 de la même matière adhésive thermoplastique que celle constituant la couche intermédiaire thermoplastique du vitrage en verre feuilleté. Une couche d'un agent de séparation approprié, directement sur la pellicule de support intermédiaire 24, c'est-à-dire en dessous de la couche 32 empêche une trop forte adhérence de la couche 32 à la pellicule de support intermédiaire.

Dès qu'une section des fils située entre deux languettes de connexion 5 est positionnée dans le poste de pressage 22, le transport des fils et de la pellicule de support intermédiaire 24 est interrompu. Une tension électrique appropriée qui suffit pour chauffer les fils entre les deux languettes de connexion à une température d'environ 80 à 150°C est alors appliquée de manière appropriée aux deux languettes de connexion 5 situées à l'extrémité antérieure et à l'extrémité postérieure du poste de pressage 22. A ce moment, le plateau de pression 28 est abaissé sur la table 27. Les fils 2, 3 et 4 sont ainsi noyés dans la couche thermoplastique 32, tandis qu'en même temps l'application de courant aux languettes de connexion 5 est interrompue. Le plateau de pression 28 est alors soulevé, de sorte que la pellicule de support intermédiaire 34 à présent pourvue des fils 2, 3 et 4 et des languettes de connexion 5 peut être avancée pas à pas par l'intermédiaire d'un rouleau de guidage 35.

En même temps que se réalise, dans le poste de pressage 22, la fixation par collage des fils sur la pellicule de support intermédiaire 24 a lieu, dans le poste de soudage par friction 15, la fabrication des languettes de connexion 5 destinées à la section de fils suivante.

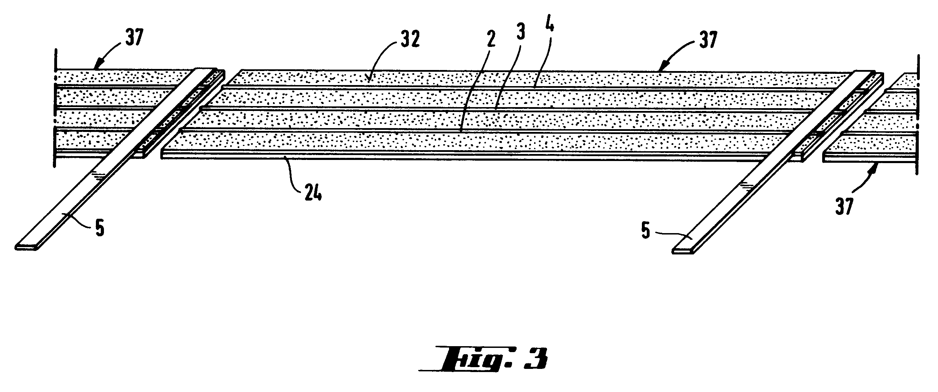

La bande sans fin 34 fabriquée de cette façon est à présent, comme le montre la Fig. 3, subdivisée en sections individuelles 37, chaque fois à côté d'une languette de connexion 5, ces sections individuelles constituant chaque fois un composant d'antenne préfabriqué qui peut être utilisé immédiatement pour le dépôt et la fixation des fils 2, 3 et 4 sur une feuille de verre.

La subdivision de la bande sans fin en sections individuelles 37 est avantageusement réalisée en deux étapes, à savoir une première étape dans laquelle les fils métalliques sont sectionnés et une seconde étape dans laquelle la pellicule intermédiaire est sectionnée ou est affaiblie, par exemple, par des perforations au point que les sections 37 puissent être séparées ultérieurement à la main. Pour le sectionnement des fils qui, en particulier, sont en tungstène relativement dur, de sorte que les tranchants des outils de coupe sont assez rapidement émoussés, il s'est avéré intéressant d'utiliser, par exemple un procédé de séparation électrique suivant lequel deux électrodes montées à petite distance l'une de l'autre appliquent un courant électrique aux fils, de sorte que la section des fils, située entre les électrodes, fond. Ici, la séparation ou la perforation de la pellicule de support intermédiaire peut être réalisée ensuite dans la seconde étape à l'aide d'un outil de coupe ou d'estampage.

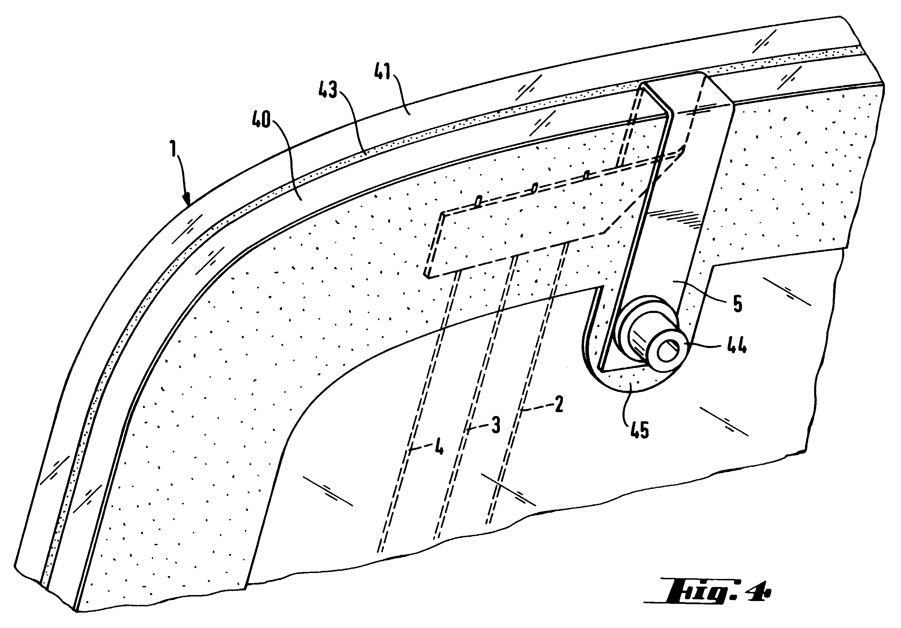

Pour la fabrication du vitrage en verre feuilleté 1 qui est représenté fragmentairement dans la zone de la connexion d'antenne sur la Fig. 4, on procède de la manière suivante : on nettoie tout d'abord soigneusement de la manière habituelle les deux feuilles de verre individuelles 40 et 41 après qu'elles aient été bombées ensemble. La feuille de verre individuelle 40 est pourvue du côté orienté vers l'habitacle des passagers, le long de son bord, d'un cadre décoratif 6 qui a été cuit au four au cours de l'opération de bombage. Sur cette feuille de verre individuelle 40, on applique, sur la surface prévue pour le contact avec la couche intermédiaire 43, parallèlement au bord latéral de la feuille de verre, un composant d'antenne 37 préfabriqué de façon telle que la languette de connexion 5 soit située dans la zone marginale supérieure de la feuille de verre. La languette de connexion 5 s'étend tout d'abord perpendiculairement aux fils d'antenne, c'est-à-dire à peu près parallèlement au bord supérieur de la feuille de verre. Ensuite, on chauffe la pellicule de support intermédiaire 24 de manière appropriée à l'aide d'un rouleau de pression chauffé qui est passé sur la pellicule de support intermédiaire. Sous l'effet de la chaleur et de la pression, la couche d'adhésif thermoplastique 32 se ramollit et s'unit avec les fils d'antenne 2, 3, 4 à la surface de la feuille de verre 40. La pellicule de support intermédiaire 24 est à présent arrachée de la surface du verre.

On peut cependant aussi procéder de la manière suivante : on chauffe initialement la feuille de verre individuelle 40 sur laquelle les fils d'antenne seront fixés, avant la pose du composant d'antenne 37, à la température nécessaire pour le ramollissement de la couche d'adhésif thermoplastique 32, puis on pose le composant d'antenne 37 à l'endroit prévu sur la feuille de verre 40 et on le presse en place. Dans ce cas, la chaleur nécessaire au ramollissement de la couche d'adhésif est fournie par le contact direct avec la surface du verre chaude et ne doit pas, comme dans le cas décrit en premier lieu, être appliquée à travers la pellicule de support intermédiaire. Immédiatement après l'application de la pression au composant d'antenne 37, la pellicule de support intermédiaire 24 peut être arrachée telle quelle de la surface du verre.

La languette de connexion 5 qui s'étend initialement sur toute sa longueur perpendiculairement aux fils d'antenne est à présent pliée, immédiatement à côté des fils d'antenne, de façon à former, par exemple, un angle droit avec la section connectée aux fils, de sorte que cette languette de connexion fait à présent saillie au-dessus du le bord de la feuille de verre 40. La feuille de verre 40 est alors assemblée avec la pellicule thermoplastique formant la couche intermédiaire 43 et la feuille de verre 41 et cet ensemble de couches est alors transformé de la manière habituelle sous l'effet de chaleur et de pression, en vitrage en verre feuilleté fini.

Dans une dernière étape du procédé, la section de la languette de connexion 5 dépassant du bord du vitrage en verre feuilleté est repliée autour de la surface périphérique de la feuille de verre 40 et est collée à la surface périphérique de la feuille de verre 40 et à la zone marginale portant la couche décorative 6. A l'extrémité de la languette de connexion 5, par exemple un organe de connexion 44 peut déjà avoir été brasé au préalable sur cette languette de connexion 5. Le collage de la languette de connexion 5 et de l'organe de connexion d'antenne 44 est avantageusement réalisé dans la zone du cadre décoratif 6 qui, à cet effet, peut, si nécessaire, être pourvu d'une extension supplémentaire 45.

Etant donné que la languette de connexion 5 est partiellement visible depuis le côté extérieur du vitrage en verre feuilleté, il peut s'avérer judicieux de pourvoir la feuille de verre 41, dans cette zone, d'une coloration adéquate adaptée à celle de la couche décorative 6 ou de colorer la languette de connexion 5 elle-même de manière adéquate.

## Revendications

1. Procédé de fabrication d'un vitrage en verre feuilleté comportant un ou plusieurs fils métalliques incorporés à la couche intermédiaire thermoplastique, caractérisé en ce que le ou les fils métalliques (2, 3, 4) sont déposés dans la disposition géométrique souhaitée sur une pellicule de support intermédiaire (24) pourvue d'une couche d'adhésif (32) faite du même polymère thermoplastique que la couche intermédiaire (43) du vitrage en verre feuilleté, sont fixés sous l'effet de chaleur et de pression, sont transférés à l'aide de la pellicule de support intermédiaire (24) sur l'une des feuilles de verre (40) formant le vitrage en verre feuilleté (1), puis après enlèvement de la pellicule de support intermédiaire (24), les feuilles de verre (40, 41) et la couche intermédiaire (43) sont transformées de la manière habituelle par un traitement ultérieur en un vitrage en verre feuilleté (1).

2. Procédé suivant la revendication 1, caractérisé en ce que les fils métalliques déposés sur la pellicule de support intermédiaire pourvue de la couche d'adhésif thermoplastique sont fixés sur celle-ci à l'aide d'un rouleau de pression chauffé.

3. Procédé suivant la revendication 1, caractérisé en ce que le ou les fils métalliques (2, 3, 4) sont orientés au-dessus de la pellicule de support intermédiaire (24) pourvue de la couche d'adhésif (32), sont chauffés par l'application d'une tension électrique aux extrémités des sections de fil à déposer et sont enfoncés dans la couche d'adhésif (32) de la pellicule de support intermédiaire (24).

4. Procédé suivant la revendication 3, caractérisé en ce que la mise en contact des fils métalliques (2, 3, 4) en vue du chauffage des fils est réalisée par un passage de courant direct à l'aide de rouleaux de guidage et de maintien (13, 35).

5. Procédé suivant l'une quelconque des revendications 1 à 4, caractérisé en ce que les fils métalliques (2, 3, 4) sont, avant d'être noyés dans la couche d'adhésif (32) de la pellicule de support intermédiaire (24), connectés à des languettes de connexion (5, 16, 17).

6. Procédé suivant la revendication 5, caractérisé en ce que les languettes de connexion (16, 17) sont soudées aux fils métalliques (2, 3, 4) par soudage par friction en utilisant un outil (18, 19) animé de vibrations ultrasoniques.

7. Procédé suivant l'une quelconque des revendications 1 à 6, caractérisé en ce que plusieurs fils métalliques (2, 3, 4) d'un diamètre de 15 à 50 µm, de préférence en tungstène, sont simultanément fixés, à des distances de 2 à 5 mm, sur la pellicule de support intermédiaire 24.

8. Procédé suivant au moins une des revendications 1 à 7, caractérisé en ce que, pour le transfert des fils sur la feuille de verre, la feuille de verre est préchauffée à une température suffisante pour le ramollissement de la couche d'adhésif thermoplastique appliquée sur la pellicule de support intermédiaire.

9. Application du procédé selon une des revendications 1 à 8 à la fabrication d'un vitrage feuilleté comportant un ou plusieurs fils d'antenne incorporés à la couche intermédiaire thermoplastique.

10. Application suivant la revendication 9, caractérisé en ce que les languettes de connexion d'antenne (5) sont utilisées pour la mise en contact des fils d'antenne (2, 3, 4) en vue du chauffage de ces fils d'antenne avant leur incorporation dans la couche d'adhésif thermoplastique (32) de la pellicule de support intermédiaire (24).

11. Application suivant une ou plusieurs des revendications 1 à 9, caractérisé en ce que le ou les fils métalliques (2, 3, 4) sont déposés et fixés à l'état de fils sans fin sur une pellicule de support intermédiaire sans fin (24) dont des sections individuelles (37) sont séparées pour former des composants d'antenne préfabriqués et ce, d'une manière telle que les fils (2, 3, 4) soient d'abord sectionnés sous l'effet d'une énergie électrique et qu'ensuite la pellicule de support intermédiaire soit totalement ou partiellement séparée à l'intervention d'un outil d'estampage ou de coupe mécanique en cet endroit.

12. Procédé de fabrication de composants préfabriqués comportants un ou plusieurs fils métalliques et destinés à être incorporés dans la couche intermédiaire thermoplastique d'un vitrage en verre feuilleté, caractérisé en ce que le ou les fils métalliques sont dévidés de bobines et tendus, sont pourvus de languettes de connexion électrique à des distances prédéterminées, ensuite déposés dans la disposition géométrique souhaitée sur une pellicule de support intermédiaire sans fin pourvue d'une couche d'adhésif (32) faite du même polymère thermoplastique que la couche intermédiaire du vitrage en verre feuilleté et sont fixés sur la pellicule de support sous l'effet de chaleur et de pression, et que la pellicule de support sans fin est divisée en sections individuelles formant les composants préfabriqués.

13. Procédé selon la revendication 12, caractérisé en ce que plusieurs fils sont simultanément fixés sur la pellicule de support intermédiaire.

## Claims

1. Process for the production of a laminated glass glazing having one or more metal wires incorporated into the intermediate, thermoplastic layer, characterized in that the metal wire or wires (2, 3, 4) are deposited in the desired, geometrical arrangement on an intermediate support film (24), provided with an adhesive coating (32) formed from the same thermoplastic polymer as the intermediate layer (43) of the laminated glass glazing, are fixed under the effect of heat and pressure, are transferred with the aid of the intermediate support film (24) to one of the glass sheets (40) forming the laminated glass glazing (1) and then, following the removal of the intermediate support film (24), the glass sheets (40, 41) and the intermediate layer (43) are transformed in the conventional manner by a subsequent treatment into a laminated glass glazing (1).

2. Process according to claim 1, characterized in that the metal wires deposited on the intermediate support film provided with the thermoplastic adhesive coating are fixed thereto with the aid of a heated pressure roller.

3. Process according to claim 1, characterized in that the metal wire or wires (2, 3, 4) are oriented above the intermediate support film (24) provided with the adhesive coating (32) and are heated by the application of a voltage to the ends of the wire sections to be deposited and are embedded in the adhesive coating (32) of the intermediate support film (24).

4. Process according to claim 3, characterized in that the contacting of the metal wires (2, 3, 4) with a view to the heating of the wires takes place as a result of the passage of a direct current with the aid of guiding and supporting rollers (13, 35).

5. Process according to any one of the claims 1 to 4, characterized in that the metal wires (2, 3, 4), prior to being embedded in the adhesive coating (32) of the intermediate support film (24), are connected to connecting tongues (5, 16, 17).

6. Process according to claim 5, characterized in that the connecting tongues (16, 17) are welded to the metal wires (2, 3, 4) by friction welding using a tool (18, 19) subject to ultrasonic vibrations.

7. Process according to any one of the claims 1 to 6, characterized in that several metal wires (2, 3, 4), preferably of tungsten, having a diameter of 15 to 50 µm are simultaneously fixed, at distances of 2 to 5 mm, to the intermediate support film (24).

8. Process according to at least one of the claims 1 to 7, characterized in that, for the transfer of the wires to the glass sheet, said glass sheet is preheated to an adequate temperature for the softening of the thermoplastic adhesive coating applied to the intermediate support film.

9. Application of the process according to any one of the claims 1 to 8 to the manufacture of a laminated glazing having one or more antenna wires incorporated into the intermediate thermoplastic layer.

10. Application according to claim 9, characterized in that the antenna connection tongues (5) are used for the contacting of the antenna wires (2, 3, 4) with a view to the heating of said antenna wires prior to their incorporation in the adhesive thermoplastic layer (32) of the intermediate support film (24).

11. Application according to one or more of the claims 1 to 9, characterized in that the metal wire or wires (2, 3, 4) are deposited and fixed in endless wire state to an intermediate, endless support film (24), whose individual sections (37) are separated in order to form prefabricated antenna components, in such a way that the wires (2, 3, 4) are firstly sectionalized under the effect of electric power and then the intermediate support film is totally or partly separated at the intervention of a stamping or mechanical cutting tool at this location.

12. Process for the production of prefabricated components having one or more metal wires and to be incorporated into the intermediate thermoplastic layer of a laminated glass glazing, characterized in that the metal wire or wires are unwound from reels and taut, are provided with electrical connection tongues at predetermined distances, then deposited in the desired geometrical arrangement on a continuous, intermediate support film provided with an adhesive coating (32) formed from the same thermoplastic polymer as the intermediate layer of the laminated glass glazing and are fixed to the support film under heat and pressure action, and that the continuous support film is subdivided into individual sections forming the prefabricated components.

13. Process according to claim 12, characterized in that several wires are simultaneously fixed to the intermediate support film.

## Patentansprüche

1. Verfahren zum Herstellen einer Verbundglasscheibe mit einem oder mehreren in der thermoplastischen Zwischenschicht angeordneten metallischen Drähten, **dadurch gekennzeichnet,** daß der oder die metallischen Drähte (2,3,4) auf einer mit einer Kleberschicht (32) aus dem gleichen thermoplastischen Polymer wie die Zwischenschicht (43) der Verbundglasscheibe versehenen Zwischenträgerfolie (24) in der gewünschten geometrischen Anordnung abgelegt und durch Anwendung von Wärme und Druck fixiert, mit Hilfe der Zwischenträgerfolie (24) auf eine der die Verbundglasscheibe (1) bildenden Glasscheiben (40) übertragen und nach Entfernen der Zwischenträgerfolie (24) die Glasscheiben (40,41) und die Zwischenschicht (43) in üblicher Weise zur Verbundglasscheibe (1) weiterverarbeitet werden.

2. Verfahren nach Anspruch 1, dadurch gekennzeichnet, daß die auf der mit der thermoplastischen Kleberschicht versehenen Zwischenträgerfolie abgelegten metallischen Drähte mit Hilfe einer beheizten Druckrolle auf dieser fixiert werden.

3. Verfahren nach Anspruch 1, dadurch gekennzeichnet, daß der oder die metallischen Drähte (2,3,4) oberhalb der mit der Kleberschicht (32) versehenen Zwischenträgerfolie (24) ausgerichtet, durch Anlegen einer elektrischen Spannung an den Enden der abzulegenden Drahtabschnitte erwärmt und in die Kleberschicht (32) der Zwischenträgerfolie (24) eingedrückt werden.

4. Verfahren nach Anspruch 3, dadurch gekennzeichnet, daß die Kontaktierung der metallischen Drähte (2,3,4) zum Erwärmen der Drähte durch direkten Stromdurchgang durch Umlenk- und Halterollen (13,35) erfolgt.

5. Verfahren nach einem der Ansprüche 1 bis 4, dadurch gekennzeichnet, daß die metallischen Drähte (2,3,4) vor dem Einbetten in die Kleberschicht (32) der Zwischenträgerfolie (24) mit Anschlußfahnen (5,16,17) verbunden werden.

6. Verfahren nach Anspruch 5, dadurch gekennzeichnet, daß die Anschlußfahnen (16,17) durch Reibschweißen unter Verwendung eines in Ultraschallschwingungen versetzten Werkzeugs (18,19) mit metallischen Drähten (2,3,4) verweißt werden.

7. Verfahren nach einem der Ansprüche 1 bis 6, dadurch gekennzeichnet, daß gleichzeitig mehrere merallische Drähte (2,3,4) mit einem Durchmesser von 15 bis 50 µm, vorzugsweise aus Wolfram, in Abständen von 2 bis 5 mm auf der Zwischenträgerfolie (24) fixiert werden.

8. Verfahren nach einem der Ansprüche 1 bis 7, dadurch gekennzeichnet, daß zum Übertragen der Drähte auf die Glasscheibe diese auf eine Temperatur vorgewärmt wird, die zum Erweichen der auf der Zwischenträgerfolie aufgebrachten thermoplastischen Kleberschicht ausreicht.

9. Anwendung des Verfahrens nach einem der Ansprüche 1 bis 8 bei der Herstellung einer Verbundglasscheibe mit einem oder mehreren in der thermoplastischen Zwischenschicht eingebetteten Antennendrähten.

10. Anwendung nach Anspruch 9, dadurch gekennzeichnet, daß die Antennenanschlußfahnen (5) zum Kontaktieren der Antennendrähte (2,3,4) für die Erwärmung dieser Antennendrähte vor dem Einbetten in die thermoplastische Kleberschicht (32) der Zwischenträgerfolie (24) benutzt werden.

11. Anwendung nach einem oder mehreren der Ansprüche 1 bis 9, dadurch gekennzeichnet, daß der oder die metallischen Drähte (2,3,4) als endlose Drähte auf einer endlosen Zwischenträgerfolie (24) abgelegt und fixiert werden, von der zur Bildung vorgefertigter Antennenbauelemente einzelne Abschnitte (37) in der Weise abgetrennt werden, daß zunächst die Drähte (2,3,4) durch elektrische Energie durchgetrennt und anschließend mit einem mechanischen Stanz- oder Schneidwerkzeug an dieser Stelle die Zwischenträgerfolie teilweise oder vollständig durchgetrennt wird.

12. Verfahren zur Herstellung vorgefertigter Komponenten mit einem oder mehreren metallischen Drähten, die für die Einbettung in die thermoplastische Zwischenschicht einer Verbundglasscheibe bestimmt sind, dadurch gekennzeichnet, daß der metallische Draht oder die metallischen Drähte von Vorratsspulen abgewickelt und gespannt, in vorbestimmten Abständen mit elektrischen Anschlußfahnen versehen, anschließend in der gewünschten geometrischen Anordnung auf einer mit einer Kleberschicht aus demselben thermoplastischen Polymer wie die Zwischenschicht der Verbundglasscheibe versehenen endlosen Zwischenträgerfolie abgelegt und auf der Trägerfolie durch Anwendung von Wärme und Druck fixiert werden, und daß die endlose Trägerfolie in einzelne Abschnitte unterteilt wird, die die vorgefertigten Komponenten bilden.

13. Verfahren nach Anspruch 12, dadurch gekennzeichnet, daß mehrere Drähte gleichzeitig auf der Zwischenträgerfolie fixiert werden.
